(19) Europäisches Patentamt
European Patent Office
Office européen des brevets

(11) **EP 4 664 969 A1**

(12) **EUROPEAN PATENT APPLICATION**
published in accordance with Art. 153(4) EPC

(43) Date of publication:
**17.12.2025 Bulletin 2025/51**

(21) Application number: **24755906.5**

(22) Date of filing: **22.01.2024**

(51) International Patent Classification (IPC):
*H04W 24/02* (2009.01)

(52) Cooperative Patent Classification (CPC):
**H04B 17/309; H04L 5/00; H04W 24/02;**
**H04W 24/10; H04W 72/0453; H04W 72/20;**
**H04W 72/566**

(86) International application number:
**PCT/CN2024/073413**

(87) International publication number:
**WO 2024/169531 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **16.02.2023 CN 202310164280**

(71) Applicant: **Huawei Technologies Co., Ltd.**
**Shenzhen, Guangdong 518129 (CN)**

(72) Inventors:
• **GAO, Xin**
  **Shenzhen, Guangdong 518129 (CN)**
• **HUANG, Su**
  **Shenzhen, Guangdong 518129 (CN)**
• **LIU, Mengting**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **COMMUNICATION METHOD AND APPARATUS**

(57)    This application relates to the field of communication technologies, and discloses a communication method and apparatus. The method includes: A terminal device determines priorities of a plurality of TRPs, and measures reference signals from the plurality of TRPs based on the priorities of the plurality of TRPs. The priorities of the plurality of TRPs are: A priority of a first TRP is higher than a priority of a second TRP; and/or the priority of the second TRP is higher than a priority of a third TRP. Reference signals from the first TRP are on a first frequency band group; reference signals from the second TRP are on a second frequency band group, and a total bandwidth of the first frequency band group is the same as a total bandwidth of the second frequency band group. Reference signals from the third TRP are on a third frequency band group, and the total bandwidth of the first frequency band group is different from a total bandwidth of the third frequency band group. This helps reduce a quantity of times of frequency band switching and/or FFT switching in a measurement process, and lower complexity of baseband implementation and radio frequency implementation when the terminal device performs CA positioning measurement.

```
┌─────────────────┐              ┌──────────────────┐
│ Terminal device │              │ Positioning server│
└─────────────────┘              └──────────────────┘
        │          S601: Third information         │
        │         (used to configure PRSs from     │
        │            a plurality of TRPs)          │
        │ ◄─ ─ ─ ─ ─ ─ ─ ─ ─ ─ ─ ─ ─ ─ ─ ─ ─ ─ ─  │
┌───────┴──────────────┐                           │
│ S602: Determine      │                           │
│ priorities of the    │                           │
│ plurality of TRPs    │                           │
│ according to a       │                           │
│ predefined or        │                           │
│ preconfigured        │                           │
│ priority rule        │                           │
└───────┬──────────────┘                           │
┌───────┴──────────────┐                           │
│ S603: Measure the    │                           │
│ PRSs from the        │                           │
│ plurality of TRPs    │                           │
│ based on the         │                           │
│ priorities of the    │                           │
│ plurality of TRPs    │                           │
└───────┬──────────────┘                           │
        │                                          │
```

FIG. 6

**Description**

CROSS-REFERENCE TO RELATED APPLICATIONS

This application claims priority to Chinese Patent Application No. 202310164280.9, filed with the China National Intellectual Property Administration on February 16, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

In a positioning scenario, a terminal device may receive positioning reference signals (positioning reference signal, PRS) from a plurality of transmission and reception points (transmission and reception point, TRP), and measure time (differences) of arrival or angles of arrival of the plurality of PRSs. Further, a position of the terminal device may be calculated based on the time (differences) of arrival or the angles of arrival of the plurality of PRSs and coordinates of the plurality of TRPs.

As a bandwidth of the PRS increases, temporal resolution becomes higher, and a multipath resolution capability becomes stronger, so that time of arrival of the 1st path can be identified more accurately, and a position estimation error can be reduced. Therefore, positioning accuracy can be effectively improved by increasing the bandwidth of the PRS. Currently, carrier aggregation (carrier aggregation, CA) positioning is introduced, to be specific, the terminal device may process PRSs on a plurality of frequency bands jointly, to increase the bandwidth of the PRS.

However, in a CA positioning scenario, how to lower processing complexity of measuring a PRS by a terminal device still needs to be further studied.

SUMMARY

This application provides a communication method and apparatus, to lower processing complexity of measuring a reference signal by a terminal device in a CA positioning scenario.

**According to a first aspect,** an embodiment of this application provides a communication method. The method may be applied to a terminal device or a component (for example, a circuit or a chip) in the terminal device. For example, the method is applied to the terminal device. In the method, the terminal device determines priorities of a plurality of transmission and reception points TRPs; and measures reference signals from the plurality of TRPs based on the priorities of the plurality of TRPs. The priorities of the plurality of TRPs are: A priority of a first TRP is higher than a priority of a second TRP, and/or the priority of the second TRP is higher than a priority of a third TRP. Reference signals from the first TRP are on a first frequency band group, and the first frequency band group is a reference frequency band group; reference signals from the second TRP are on a second frequency band group, and a total bandwidth of the first frequency band group is the same as a total bandwidth of the second frequency band group; and reference signals from the third TRP are on a third frequency band group, and the total bandwidth of the first frequency band group is different from a total bandwidth of the third frequency band group.

The foregoing method helps reduce a quantity of times of frequency band switching and/or FFT switching in a measurement process is reduced, and lower complexity of baseband implementation and radio frequency implementation when the terminal device performs CA positioning measurement.

In a possible design, determining the priorities of the plurality of TRPs includes: determining the priorities of the plurality of TRPs according to a predefined or preconfigured priority rule.

In this way, because the terminal device determines the priorities of the plurality of TRPs according to the preconfigured or predefined priority rule, no additional signaling overheads are introduced, to help save transmission resources.

In a possible design, the priority rule includes: the priority of the TRP whose reference signals are on the first frequency band group is higher than the priority of the TRP whose reference signals are on the second frequency band group; and/or the priority of the TRP whose reference signals are on the second frequency band group is higher than the priority of the TRP whose reference signals are on the third frequency band group.

In a possible design, determining the priorities of the plurality of TRPs includes: receiving first information from a positioning server, where the first information indicates the priorities of the plurality of TRPs; and determining the priorities of the plurality of TRPs based on the first information.

In this way, the positioning server indicates the priorities of the plurality of TRPs to the terminal device, to reduce a processing load of the terminal device.

In a possible design, the first information includes priorities of a plurality of frequency band groups, and the priorities of the plurality of frequency band groups are: a priority of the first frequency band group is higher than a priority of the second frequency band group; and/or the priority of the second frequency band group is higher than a priority of the third frequency band group.

In a possible design, the method further includes: sending second information to the positioning server, where the second information indicates at least one frequency band expected by the terminal device; and receiving third information from the positioning server, where the third information is used to configure the reference signals from the plurality of TRPs, and the reference signals from the plurality of TRPs are on the at least one frequency band.

In this way, the positioning server may send the third information to the terminal device based on the frequency band expected by the terminal device. This does not only help meet a measurement requirement on a terminal device side, but also reduces a waste of configuration resources, and improves resource utilization.

In a possible design, the method further includes: receiving request information from the positioning server, where the request information is used to request a frequency band expected by the terminal device, the request information includes a plurality of candidate frequency bands, and the at least one frequency band belongs to the plurality of candidate frequency bands.

In a possible design, the method further includes: receiving fourth information from the positioning server, where the fourth information indicates the reference frequency band group.

In a possible design, the fourth information includes identifiers of a plurality of frequency bands included in the reference frequency band group, or identifiers of reference signal resource sets corresponding to reference signals on the reference frequency band group.

**According to** a **second aspect,** an embodiment of this application provides a communication method. The method may be applied to a terminal device or a component (for example, a circuit or a chip) in the terminal device. For example, the method is applied to the terminal device. In the method, the terminal device receives first information from a positioning server, where the first information indicates priorities of a plurality of TRPs; and measures reference signals from the plurality of TRPs based on the priorities of the plurality of TRPs.

According to the foregoing method, the positioning server indicates the priorities of the plurality of TRPs to the terminal device, so that flexibility of controlling the terminal device by the positioning server is improved.

In a possible design, the first information includes priorities of a plurality of frequency band groups, and the priorities of the plurality of frequency band groups are: a priority of a first frequency band group is higher than a priority of a second frequency band group; and/or the priority of the second frequency band group is higher than a priority of a third frequency band group. The first frequency band group is a reference frequency band group, a total bandwidth of the first frequency band group is the same as a total bandwidth of the second frequency band group, and the total bandwidth of the first frequency band group is different from a total bandwidth of the third frequency band group.

In a possible design, the method further includes: sending second information to the positioning server, where the second information indicates at least one frequency band expected by the terminal device; and receiving third information from the positioning server, where the third information is used to configure the reference signals from the plurality of TRPs, and the reference signals from the plurality of TRPs are on the at least one frequency band.

In a possible design, the method further includes: receiving request information from the positioning server, where the request information is used to request a frequency band expected by the terminal device, the request information includes a plurality of candidate frequency bands, and the at least one frequency band belongs to the plurality of candidate frequency bands.

In a possible design, the method further includes: receiving fourth information from the positioning server, where the fourth information indicates the reference frequency band group.

In a possible design, the fourth information includes identifiers of a plurality of frequency bands included in the reference frequency band group, or identifiers of reference signal resource sets corresponding to reference signals on the reference frequency band group.

**According to a third aspect,** an embodiment of this application provides a communication method. The method may be applied to a positioning server or a component (for example, a circuit or a chip) in the positioning server. For example, the method is applied to the positioning server. In the method, the positioning server determines priorities of a plurality of TRPs; and sends first information to a terminal device, where the first information indicates the priorities of the plurality of TRPs.

In a possible design, the priorities of the plurality of TRPs are: a priority of a first TRP is higher than a priority of a second TRP, and/or the priority of the second TRP is higher than a priority of a third TRP; reference signals from the first TRP are on a first frequency band group, and the first frequency band group is a reference frequency band group; reference signals from the second TRP are on a second frequency band group, and a total bandwidth of the first frequency band group is the same as a total bandwidth of the second frequency band group; and reference signals from the third TRP are on a third frequency band group, and the total bandwidth of the first frequency band group is different from a total bandwidth of the third frequency band group.

In a possible design, determining the priorities of the plurality of TRPs includes: determining the priorities of the plurality of TRPs according to a predefined or preconfigured priority rule.

In a possible design, the priority rule includes: the priority of the TRP whose reference signals are on the first frequency band group is higher than the priority of the TRP whose reference signals are on the second frequency band group; and/or the priority of the TRP whose reference signals are on the second frequency band group is higher than the priority of the TRP whose reference signals are on the third frequency band group. The first frequency band group is a reference frequency band group, the total bandwidth of the first frequency band group is the same as the total bandwidth of the second frequency band group, and the total bandwidth of the first frequency band group is different from the total bandwidth of the third frequency band group.

In a possible design, the first information includes priorities of a plurality of frequency band groups, and the priorities of the plurality of frequency band groups are: a priority of a first frequency band group is higher than a priority of a second frequency band group; and/or the priority of the second frequency band group is higher than a priority of a third frequency band group. The first frequency band group is the reference frequency band group, the total bandwidth of the first frequency band group is the same as the total bandwidth of the second frequency band group, and the total bandwidth of the first frequency band group is different from the total bandwidth of the third frequency band group.

In a possible design, the method further includes: receiving second information from the terminal device, where the second information indicates at least one frequency band expected by the terminal device; and sending third information to the terminal device, where the third information is used to configure reference signals from the plurality of TRPs, and the reference signals from the plurality of TRPs are on the at least one frequency band.

In a possible design, the method further includes: sending request information to the terminal device, where the request information is used to request the frequency band expected by the terminal device, the request information includes a plurality of candidate frequency bands, and the at least one frequency band belongs to the plurality of candidate frequency bands.

In a possible design, the method further includes: sending fourth information to the terminal device, where the fourth information indicates the reference frequency band group.

In a possible design, the fourth information includes identifiers of a plurality of frequency bands included in the reference frequency band group, or identifiers of reference signal resource sets corresponding to reference signals on the reference frequency band group.

It should be understood that, for beneficial effects of related technical features in the second aspect and the third aspect, refer to the descriptions of the first aspect. Details are not described again.

**According to a fourth aspect,** this application provides a communication apparatus. The communication apparatus can implement a function in the first aspect to the third aspect. For example, the communication apparatus includes a corresponding module, unit, or means (means) for performing an operation in the first aspect to the third aspect. The module, unit, or means may be implemented by software, or implemented by hardware, or implemented by hardware executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in the first aspect to the third aspect.

In a possible design, the communication apparatus includes a processor, and the processor may be configured to be coupled to a memory. The memory may store a necessary computer program or necessary instructions for implementing the functions in the first aspect to the third aspect. The processor may execute the computer program or the instructions stored in the memory. When the computer program or the instructions are executed, the communication apparatus is enabled to implement the method in any possible design or implementation in the first aspect to the third aspect.

In a possible design, the communication apparatus includes a processor and a memory. The memory may store a necessary computer program or necessary instructions for implementing the functions in the first aspect to the third aspect. The processor may execute the computer program or the instructions stored in the memory. When the computer program or the instructions are executed, the communication apparatus is enabled to implement the method in any possible design or implementation in the first aspect to the third aspect.

In a possible design, the communication apparatus includes a processor and an interface circuit. The processor is configured to: communicate with another apparatus through the interface circuit, and perform the method in any possible design or implementation in the first aspect to the third aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect,** this application provides a communication system. The communication system may include a terminal device and a positioning server. The terminal device is configured to perform the communication method provided in the first aspect or the second aspect, and the positioning server is configured to perform the communication method provided in the third aspect. Optionally, the communication system further includes a plurality of TRPs, and the plurality of TRPs are configured to send a positioning reference signal to the terminal device.

**According to a sixth aspect,** this application provides a communication system. The communication system may include a positioning server and a plurality of TRPs. The positioning server is configured to perform the communication method provided in the third aspect, and the plurality of TRPs are configured to send a positioning reference signal to a terminal device. Optionally, the communication system further includes a terminal device, and the terminal device is configured to perform the communication method provided in the first aspect or the second aspect.

**According to a seventh aspect,** this application provides a computer-readable storage medium. The computer-storage medium stores computer-readable instructions. When a computer reads and executes the computer-readable instructions, the computer is enabled to perform the method in any one of the possible designs of the first aspect to the third aspect.

**According to an eighth aspect,** this application provides a computer program product. When a computer reads and executes the computer program product, the computer is enabled to perform the method in any one of the possible designs of the first aspect to the third aspect.

**According to a ninth aspect,** this application provides a chip. The chip includes a processor. The processor is coupled to a memory to read and execute a software program stored in the memory, to implement the method in any one of the possible designs of the first aspect to the third aspect.

BRIEF DESCRIPTION OF DRAWINGS

FIG. 1A is a diagram of a network architecture to which an embodiment of this application is applicable;
FIG. 1B is a diagram of a network architecture to which an embodiment of this application is applicable;
FIG. 2 is a diagram of a relationship between different frequency bands according to an embodiment of this application;
FIG. 3A is a diagram of a positioning procedure according to an embodiment of this application;
FIG. 3B is a diagram of PRS resource sets from a plurality of TRPs according to an embodiment of this application;
FIG. 4 is a diagram of positioning according to an embodiment of this application;
FIG. 5 is a diagram of bandwidth aggregation according to an embodiment of this application;
FIG. 6 is a schematic flowchart corresponding to a communication method according to Embodiment 1 of this application;
FIG. 7 is a schematic flowchart corresponding to a communication method according to Embodiment 2 of this application;
FIG. 8 is a diagram of PRS resource sets from a plurality of TRPs according to an embodiment of this application;
FIG. 9 is a possible block diagram of an apparatus according to an embodiment of this application;
FIG. 10 is a diagram of a structure of a terminal device according to an embodiment of this application; and
FIG. 11 is a diagram of a structure of an apparatus (for example, a positioning server) according to an embodiment of this application.

DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system such as a long term evolution (long term evolution, LTE) system, a 5th generation (5th generation, 5G) mobile communication system such as a new radio (new radio, NR) system, and a future evolved communication system such as a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the word "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

A communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

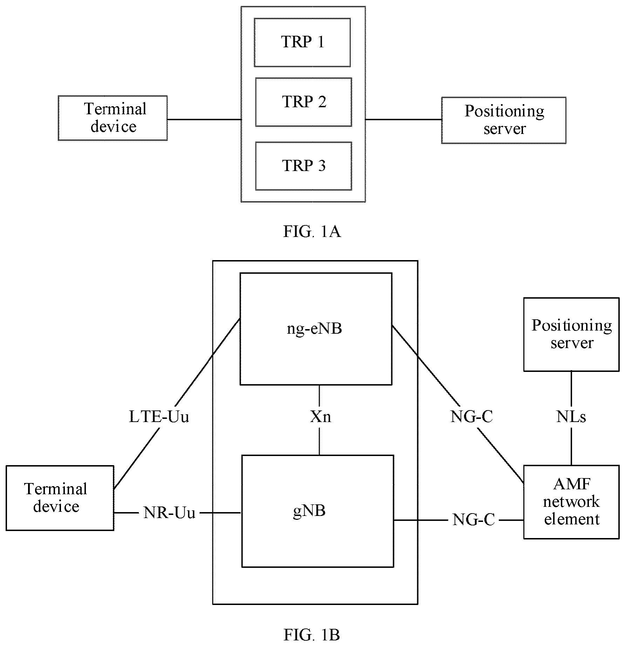

For ease of understanding of embodiments of this application, a communication system shown in FIG. 1A is first used as an example to describe in detail a communication system to which embodiments of this application are applicable. As shown in FIG. 1A, the communication system includes a terminal device, a plurality of TRPs (for example, a TRP 1, a TRP 2, and a TRP 3), and a positioning server.

The terminal device may be connected to the TRP, that is, the terminal device may communicate with the TRP. For example, the terminal device receives a reference signal sent by the TRP. The TRP may be connected to the positioning server, that is, the TRP may communicate with the positioning server. For example, the TRP may send reference signal configuration information of the TRP to the positioning server.

The following describes a terminal device, a TRP, and a positioning server.

### (1) Terminal device

The terminal device may be a device that accesses the foregoing communication system and that has a wireless transceiver function, or a chip or a chip system that may be disposed in the device. The terminal device may also be referred to as user equipment (user equipment, UE), a terminal, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or a road side unit (road side unit, RSU) that has a terminal function.

### (2) TRP

The TRP may be a device that is on a network side of the foregoing communication system and that has a wireless transceiver function, or a chip or a chip system that may be disposed in the device.

For example, the TRP in this embodiment of this application may be a RAN device or a network element deployed in a radio access network (radio access network, RAN). For example, the TRP may be a RAN device or an apparatus that can support a RAN device implementing a function, for example, a chip system or a combined component or component that can implement a function of an access network device, and the apparatus may be installed in the RAN device. For another example, the TRP may be an access point (access point, AP) in a Wi-Fi system, such as a home gateway, a router, a server, a switch, a bridge, a base station, a base station controller (base station controller, BSC), a base transceiver station (base transceiver station, BTS), a home base station, a baseband unit (baseband unit, BBU), a wireless relay node, or a wireless backhaul node; or may be an evolved NodeB (evolved NodeB, eNB) in a 4G system, a next-generation eNB (ng-eNB) during transition from 4G to 5G, a next generation base station (next generation NodeB, gNB) in a 5G system, or a RAN node that implements (partial) functions of a gNB. The RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). Alternatively, the TRP may be a satellite or a base station in various forms in the future. In addition, the TRP may be a macro base station, or may be a micro base station or an indoor base station, or may be a relay node, a donor node, or the like.

### (3) Positioning server

The positioning server may be configured to determine a position of a terminal device, obtain downlink position measurement or position estimation from the terminal device, or the like. For example, the positioning server in this embodiment of this application may be a device or a network element deployed in a core network. For example, the positioning server may be a location management function (location management function, LMF) network element, or the LMF network element may have another possible name. This is not limited in this embodiment of this application.

It may be understood that FIG. 1A is merely a simplified diagram of an example for ease of understanding. The communication system may further include another possible device, for example, may further include a wireless relay device and a wireless backhaul device, which are not shown in FIG. 1A. Communication between different devices in embodiments of this application may be direct communication between different devices (that is, no another device is needed for forwarding or forwarding), or may be communication between different devices by using another device (that is, another device is needed for forwarding or forwarding). In other words, in this application, "sending information to... (a terminal device)" may be understood as that a destination end of the information is the terminal device, and may include directly or indirectly sending the information to the terminal device. "Receiving information from... (the terminal device)" may be understood as that a source end of the information is the terminal device, and may include directly or indirectly receiving the information from the terminal device. Information may undergo necessary processing between the source end and the destination end of sending the information, for example, a format change. However, the destination end may understand valid information from the source end. Similar descriptions in this application may be understood similarly. Details are not described herein.

Based on the foregoing description, the following describes still another possible communication system with reference to **FIG. 1B** by using an example in which the plurality of TRPs in FIG. 1A include a ng-eNB and a gNB. As shown in FIG. 1B, the communication system may include a terminal device (such as UE), a plurality of TRPs (such as a ng-eNB and a gNB), an access and mobility management function (access and mobility management function, AMF) network element, and a positioning server.

The TRP communicates with the positioning server via the AMF network element. The AMF network element may be configured to manage access control and mobility of the terminal device. During actual application, the AMF network element includes a mobility management function in a mobility management entity (mobility management entity, MME) in an LTE network framework, and includes an access management function. The AMF network element may specifically be responsible for registration of the terminal device, mobility management, a tracking area update procedure, reachability detection, selection of a session management function network element, mobility status transition management, and the like. In addition, the AMF network element may have another possible name. This is not limited in this application.

In FIG. 1B, for meanings of an LTE-Uu interface between the ng-eNB and the UE, an NR-Uu interface between the gNB and the UE, an NG-C interface between the ng-eNB and the AMF, an NG-C interface between the gNB and the AMF, an NLs interface between the LMF and the AMF, and an Xn interface between the ng-eNB and the gNB, refer to meanings defined in the 3GPP standard protocol. Meanings of the foregoing interfaces are not limited in this application. In addition, a name of an interface between network functions is merely an example. In specific implementation, an interface name of the communication system may alternatively be another name. This is not limited in this embodiment of this application.

In addition, the technical solutions in embodiments of this application may be further applied to another communication system, and a corresponding name may alternatively be replaced with a name of a corresponding function in the another communication system.

The following first describes related technical features in embodiments of this application. It should be noted that the descriptions are intended to make embodiments of this application easier to understand, but should not be construed as a limitation on the protection scope claimed in this application.

## (1) Frequency band and frequency band group

A frequency band in embodiments of this application may also be referred to as a band, a carrier, a carrier unit (component carrier, CC), or a physical frequency layer (physical frequency layer, PFL). The physical frequency layer may be referred to as a frequency layer for short, and there may be a plurality of frequency layers. For example, the frequency layer in embodiments of this application may be a positioning frequency layer, that is, a frequency layer at which a positioning reference signal is located. The frequency band may be a frequency segment, or a frequency range. One frequency band may correspond to one frequency, and the frequency may be a center frequency of the frequency band.

The frequency band group may include at least one frequency band. The following uses an example in which the frequency band group includes a plurality of frequency bands. Bandwidths of any two of the plurality of frequency bands included in the frequency band group may be the same. For example, the frequency band group includes two frequency bands (which are a frequency band a and a frequency band b respectively), and bandwidths of the frequency band a and the frequency band b may be 50 megahertz (MHz). Alternatively, bandwidths of any two of the plurality of frequency bands included in the frequency band group may be different. For example, the bandwidth of the frequency band a may be 50 MHz, and the bandwidth of the frequency band b may be 100 MHz.

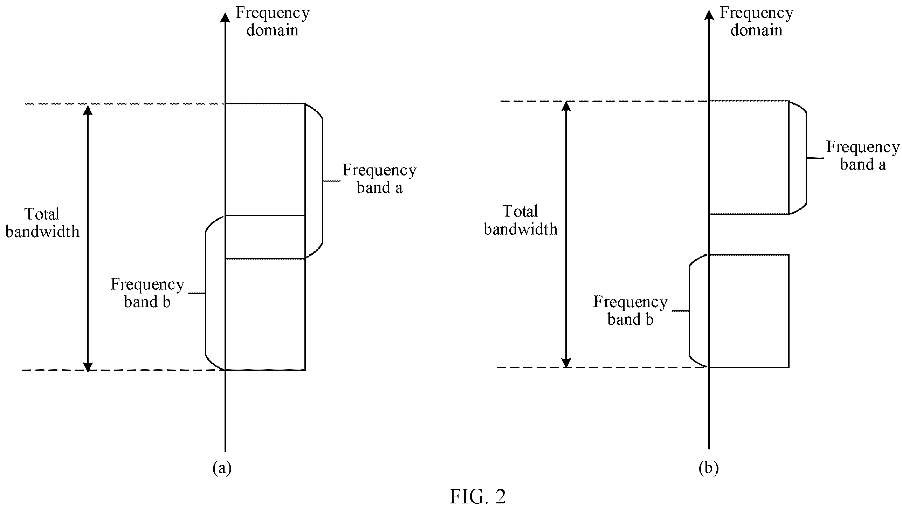

Any two of the plurality of frequency bands included in the frequency band group may overlap in frequency domain. For example, as shown in (a) in FIG. 2, a highest frequency domain point of the frequency band a is higher than a highest frequency domain point of the frequency band b, and a lowest frequency domain point of the frequency band a is lower than the highest frequency domain point of the frequency band b. Alternatively, any two of the plurality of frequency bands included in the frequency band group may not overlap in frequency domain. For example, as shown in (b) in FIG. 2, a lowest frequency domain point of the frequency band a is higher than a highest frequency domain point of the frequency band b. A total bandwidth of the frequency band group may be a bandwidth between a highest frequency domain point and a lowest frequency domain point of the plurality of frequency bands included in the frequency band group, that is, a bandwidth between a highest frequency domain point of the frequency band a and a lowest frequency domain point of the frequency band b.

The plurality of frequency bands included in the frequency band group may be consecutive or inconsecutive. That the plurality of frequency bands included in the frequency band group are consecutive may mean that numbers of the plurality of frequency bands included in the frequency band group are consecutive. For example, if the numbers of the frequency bands are 1, 2, 3, ..., and the like, a frequency band 1 and a frequency band 2 are consecutive frequency bands, and the frequency band 2 and a frequency band 3 are consecutive frequency bands. For example, the numbers of frequency bands may be preconfigured or predefined. For example, frequency bands with consecutive numbers are adjacent frequency bands, or logically consecutive frequency bands. For example, there may be a frequency domain gap (gap) between adjacent frequency bands or logically consecutive frequency bands, and the frequency domain gap may be a guard interval. In embodiments of this application, "the numbers of the plurality of frequency bands included in the frequency band group are consecutive" is used as an example for description.

## (2) Reference signal

The reference signal in embodiments of this application may be a downlink reference signal. For example, the downlink reference signal may include a primary synchronization signal (primary synchronization signal, PSS)/secondary synchronization signal (secondary synchronization signal, SSS), a synchronization signal/physical broadcast channel block (synchronization signal/physical broadcast channel block, SSB), a demodulation reference signal (demodulation reference signal, DMRS), a channel state information reference signal (channel status information reference signal, CSI-RS), a PRS, and the like.

The following uses an example in which the reference signal is a PRS for description.

## (3) Positioning technology

A positioning technology is a technology of determining a position of a terminal device based on time (differences) of arrival and/or angles of arrival of a plurality of PRSs arriving at the terminal device. The positioning technology includes but is not limited to: a downlink time difference of arrival (downlink time difference of arrival, DL-TDOA), a downlink angle of departure (downlink angle of departure, DL-AOD), an uplink time difference of arrival (uplink time difference of arrival, UL-TDOA), an uplink angle of arrival (uplink angle of arrival, UL-AOA), and multi-cell round trip time (multi round trip time, multi-RTT).

The DL-TDOA, UL-TDOA, and multi-RTT positioning technologies are implemented based on time of arrival. Specifically, the terminal device measures the time (differences) of arrival of the plurality of PRSs, and determines a distance (difference) between the terminal device and each TRP, to determine the position of the terminal device. The DL-AOD and UL-AOA positioning technologies are implemented based on an angle of arrival. Specifically, the terminal device measures the angles of arrival of the plurality of PRSs, and determines an angle between the terminal device and each TRP, to determine the position of the terminal device.

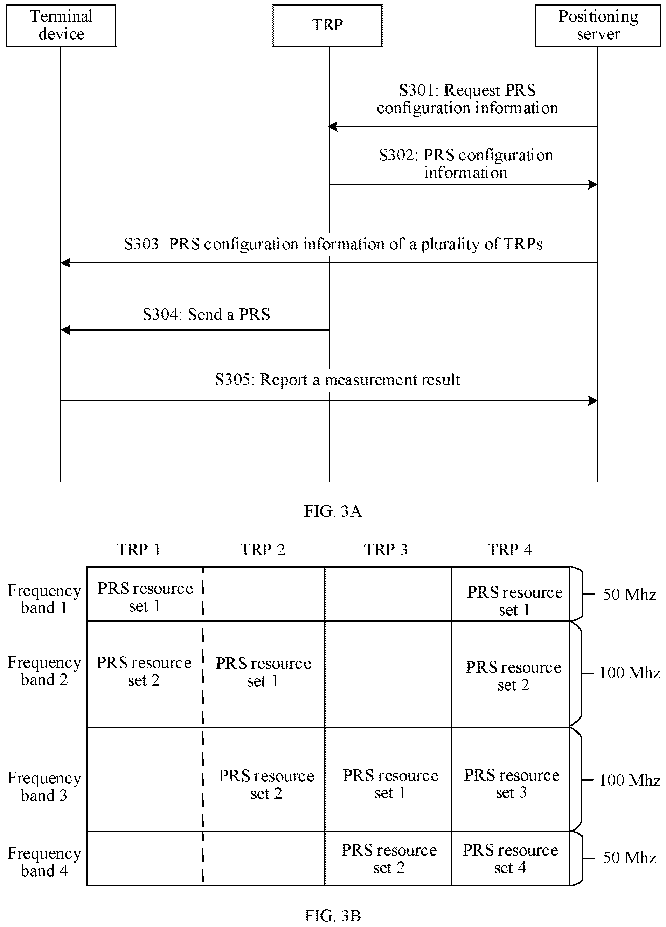

The following describes a possible positioning procedure with reference to FIG. 3A. As shown in **FIG. 3A,** the positioning procedure may include the following steps.

**S301:** A positioning server requests PRS configuration information from a TRP (where there are usually a plurality of TRPs).

Herein, the positioning server may send a request message to the TRP, where the request message is used to request the PRS configuration information. For example, the positioning server may send the request message to the TRP via an AMF network element.

**S302:** The TRP sends the PRS configuration information to the positioning server.

Herein, the TRP may send a response message to the positioning server, where the response message includes the PRS configuration information. For example, the TRP may send the response message to the positioning server via the AMF network element.

**S303:** The positioning server sends the PRS configuration information of the plurality of TRPs to a terminal device.

For example, the positioning server may send the PRS configuration information of the plurality of TRPs to the terminal device by using LTE positioning protocol (LTE positioning protocol, LPP) signaling. PRS configuration information of each TRP in the plurality of TRPs is used to configure at least one PRS resource set that is from the TRP and that is on at least one frequency band.

**FIG. 3B** is an example of PRS resource sets from the plurality of TRPs. As shown in FIG. 3B, the plurality of TRPs include a TRP 1, a TRP 2, a TRP 3, and a TRP 4. PRS resource sets from the TRP 1 include a PRS resource set 1 on a frequency band 1 and a PRS resource set 2 on a frequency band 2. PRS resource sets from the TRP 2 include a PRS resource set 1 on the frequency band 2 and a PRS resource set 2 on a frequency band 3. PRS resource sets from the TRP 3 include a PRS resource set 1 on the frequency band 3 and a PRS resource set 2 on a frequency band 4. PRS resource sets from the TRP 4 include a PRS resource set 1 on the frequency band 1, a PRS resource set 2 on the frequency band 2, a PRS resource set 3 on the frequency band 3, and a PRS resource set 4 on the frequency band 4.

One PRS resource set may include a plurality of PRS resources, for example, one PRS resource set may include a maximum of 64 PRS resources. One PRS resource may include a frequency domain resource carrying a PRS, sending time and a sending periodicity of the PRS, and a quantity of ports for sending the PRS. For example, PRS resources from all TRPs on a same frequency band have some common features, for example, have a same bandwidth and a same subcarrier spacing.

For PRS resource sets from a plurality of TRPs, descriptions are as follows: It is specified in a current standard that a maximum of four frequency bands may be configured for a terminal device, and each TRP may configure a maximum of two PRS resource sets on each frequency band. For a specific TRP (for example, the TRP 1 in FIG. 3B), PRS resource sets may be configured only on some frequency bands (for example, the frequency band 1 and the frequency band 2), and some TRPs (for example, the TRP 4) may configure PRS resource sets on all frequency bands. From a perspective of an entire system, this is because the TRP is not only used for positioning, it cannot ensure that all TRPs can configure PRS resource sets on all frequency bands at every moment.

Optionally, in S303, the positioning server may further send information 1 and/or information 2 to the terminal device. The information 1 indicates a reference TRP. For example, the information 1 may include an identifier of the reference TRP. The information 2 indicates a reference frequency band. For example, the information 2 may include an identifier of the reference frequency band, or an identifier of a PRS resource set from the reference TRP on the reference frequency band (if the reference TRP configures a plurality of PRS resource sets on the reference frequency band, the information 2 may include an identifier of one of the PRS resource sets).

For example, the positioning server may send the PRS configuration information, the information 1, and the information 2 of the plurality of TRPs to the terminal device by using same signaling (for example, the LPP signaling), or may send the PRS configuration information, the information 1, and the information 2 of the plurality of TRPs to the terminal device by using different signaling.

**S304:** The TRP sends a PRS to the terminal device. Correspondingly, the terminal device measures the received PRS based on the PRS configuration information of the TRP.

**S305:** The terminal device reports a measurement result to the positioning server. Correspondingly, the positioning server estimates a position of the terminal device based on the measurement result reported by the terminal device. Alternatively, the terminal device may estimate the position of the terminal device based on the measurement result.

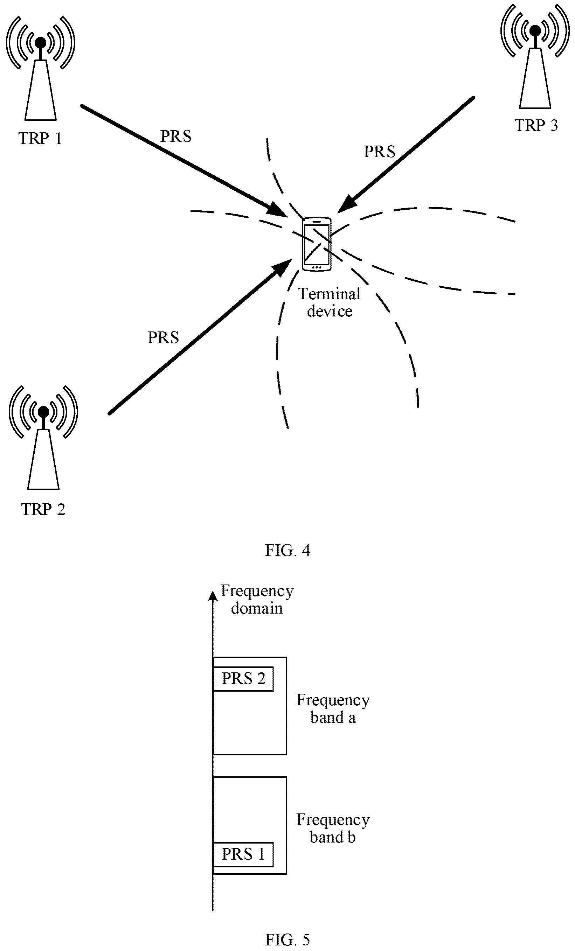

With reference to FIG. 4, the following describes, by using the DL-TDOA as an example, a process of estimating the position of the terminal device by the positioning server. As shown in FIG. 4, three TRPs are included: a TRP 1, a TRP 2, and a TRP 3. For PRS resource sets from the three TRPs, refer to FIG. 3B. It is known that coordinates of the TRP 1 are $(x_1, y_1)$, coordinates of the TRP2 are $(x_2, y_2)$, and coordinates of the TRP 3 are $(x_3, y_3)$. It is assumed that coordinates of a to-be-positioned terminal device are ($x_{UE}$, $y_{UE}$), where $x_{UE}$ and $y_{UE}$ are unknowns. The TRP 1 is used as a reference TRP, and a frequency band 1 is used as a reference frequency band. The terminal device may measure a time difference of arrival $\Delta t_{21}$ between a PRS that is from the TRP 2 and that is on a frequency band 2 or a frequency band 3 and a PRS that is from the TRP 1 and that is on the reference frequency band, and a time difference of arrival $\Delta t_{31}$ between a PRS that is from the TRP 3 and that is on the frequency band 3 or a frequency band 4 and a PRS that is from the TRP 1 and that is on the reference frequency band. According to a definition of a hyperbola (to be specific, a difference between distances to two fixed points is a constant), the terminal device is located on a hyperbola with the TRP 1 and the TRP 2 as focuses, and in this case, an equation (1) is obtained; and the terminal device is located on a hyperbola with the TRP 1 and the TRP 3 as focuses, and in this case, an equation (2) is obtained.

$$\sqrt{(x_1 - x_{UE})^2 + (y_1 - y_{UE})^2} - \sqrt{(x_2 - x_{UE})^2 + (y_2 - y_{UE})^2} = c * \Delta t_{21} \quad (1)$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \quad (2)$$

c is the speed of light, and therefore, there are only two to-be-solved unknowns $x_{UE}$ and $y_{UE}$. Position coordinates of the terminal device may be calculated by combining the equation (1) and the equation (2). In other words, the terminal device or the positioning server may calculate the position of the terminal device provided that the terminal device or the positioning server knows a TRP from which each PRS comes and knows coordinates of each TRP.

### (4) Bandwidth aggregation positioning technology

In current positioning technologies, positioning accuracy is related to a bandwidth of a PRS. As a bandwidth of the PRS increases, temporal resolution becomes higher, and a multipath resolution capability becomes stronger, so that time of arrival of a 1st path can be identified more accurately, and a position estimation error can be reduced. Table 1 shows comparison of simulation results of positioning accuracy under different bandwidths corresponding to a possible scenario.

Table 1: Comparison of simulation results of positioning accuracy under different bandwidths

| Bandwidth (MHz) | Positioning accuracy (m) 50% | Positioning accuracy (m) 67% | Positioning accuracy (m) 80% | Positioning accuracy (m) 90% |
|---|---|---|---|---|
| 10 | 1.056 | 1.621 | 2.430 | 4.100 |
| 40 | 0.158 | 0.262 | 0.414 | 0.751 |
| 100 | 0.036 | 0.062 | 0.102 | 0.186 |
| 200 | 0.010 | 0.017 | 0.033 | 0.082 |

In Table 1, when the bandwidth of the PRS is 10 MHz, a positioning error of 50% of terminal devices is less than 1.056 meters (m), a positioning error of 67% of the terminal devices is less than 1.621 meters, a positioning error of 80% of the terminal devices is less than 2.430 meters, and a positioning error of 90% of the terminal devices is less than 4.100 meters.

It can be learned from Table 1 that as the bandwidth of the PRS increases, the positioning accuracy is gradually improved. However, in a current standard protocol, a maximum bandwidth of a carrier of a low band is only 100 MHz. This means that a bandwidth of a PRS can reach only 100 MHz at most, and positioning accuracy also stays at an accuracy magnitude corresponding to 100 MHz. To further improve the positioning accuracy, the bandwidth aggregation positioning technology, also referred to as a CA positioning technology, is introduced currently. The CA positioning technology refers to: A PRS transmitting end (for example, a TRP) simultaneously sends a plurality of PRSs on a plurality of frequency bands, and a PRS receiving end (for example, a terminal device) simultaneously receives the plurality of PRSs on the plurality of frequency bands, and processes the received plurality of PRSs jointly, to obtain a measurement result, where the measurement result may include information such as time information and/or angle information used for position estimation. In other words, the terminal device may process the PRSs on the plurality of frequency bands jointly, to form a larger bandwidth, for example, combine two bandwidths of 100 MHz into a large bandwidth of 200 MHz, to increase the bandwidth of the PRS and implement higher positioning accuracy.

As shown in **FIG. 5,** two PRSs used for CA positioning are respectively on two frequency bands, a PRS 1 is located at a bottom end of a frequency band b in frequency domain, and a PRS 2 is located at a top end of a frequency band a in frequency domain. The terminal device may simultaneously receive the PRSs on the two frequency bands, and combine the PRSs into one large-bandwidth PRS for positioning measurement. In addition, considering that if a frequency domain gap between the frequency band a and the frequency band b is large (for example, greater than a threshold), positioning accuracy may be affected. Therefore, in embodiments of this application, a plurality of frequency bands aggregated by the terminal device may be adjacent frequency bands (in other words, frequency bands with consecutive numbers). For example, the frequency band a and the frequency band b are adjacent frequency bands.

The DL-TDOA is still used as an example. With reference to FIG. 3B and FIG. 4, it is assumed that a TRP 1 is a reference TRP, and a reference frequency band group include a frequency band 1 and a frequency band 2. In other words, the terminal device may process PRSs on the two frequency bands jointly, to form a larger bandwidth. Specifically, the terminal device may measure a time difference of arrival $\Delta t_{21}$ between PRSs that are from a TRP 2 and that are on the two frequency bands (to be specific, the frequency band 2 and a frequency band 3) and PRSs that are from the TRP 1 and that are on the reference frequency band group (to be specific, the frequency band 1 and the frequency band 2), and a time difference of arrival $\Delta t_{31}$ between PRSs that are from a TRP 3 and that are on two frequency bands (to be specific, the frequency band 3 and a frequency band 4) and PRSs that are from the TRP 1 and that are on the reference frequency band group, and then calculate a position of the terminal device based on the equation (1) and the equation (2).

It may be understood that herein, an example in which "quantities of aggregated frequency bands are the same for different TRPs" is used for description. To be specific, for each of the TRP 1, the TRP 2, and the TRP 3, the terminal device processes PRSs on two frequency bands jointly, to form a larger bandwidth. In another possible example, quantities of aggregated frequency bands may alternatively be different for different TRPs. For example, the terminal device may measure a time difference of arrival $\Delta t_{21}$ between PRSs that are from the TRP 2 and that are on three frequency bands and PRSs that are from the TRP 1 and that are on the reference frequency band group, and a time difference of arrival $\Delta t_{31}$ between PRSs that are from the TRP 3 and that are on four frequency bands and PRSs that are from the TRP 1 and that are on two frequency bands, so that a position of the terminal device may be calculated based on the equation (1) and the equation (2).

In the following embodiments of this application, an example in which quantities of aggregated frequency bands are the same for different TRPs (to be specific, for different TRPs, quantities of aggregated frequency bands are the same as a quantity of frequency bands included in the reference frequency band group) is used for description. Further, if a quantity of frequency bands to be aggregated is 2, when a TRP configures PRSs on a plurality of frequency bands (more than two frequency bands), for the TRP, the terminal device may select two frequency bands from the plurality of frequency bands for aggregation. A specific selection manner may not be limited.

The foregoing describes related technical features in embodiments of this application. It can be learned from the foregoing description that, it is assumed that PRS resource sets from a plurality of TRPs configured by a positioning server for a terminal device are shown in FIG. 3B, bandwidths of a frequency band 1 and a frequency band 2 are both 50 MHz, and bandwidths of a frequency band 3 and a frequency band 4 are both 100 MHz. After the CA positioning technology is introduced, an example in which PRSs on two frequency bands are aggregated is used, the terminal device may sequentially measure PRSs that are from the plurality of TRPs and that are on two frequency bands, for example, sequentially measure PRSs that are from a TRP 1 and that are on two frequency bands (the frequency band 1 and the frequency band 2), PRSs that are from a TRP 2 and that are on two frequency bands (the frequency band 2 and the frequency band 3), and PRSs that are from a TRP 3 and that are on two frequency bands (the frequency band 3 and the frequency band 4).

The TRP 1 and the TRP 2 are used as an example. Because the two frequency bands of the TRP 1 are different from those of the TRP 2, after measuring the PRSs that are from the TRP 1 and that are on the two frequency bands, the terminal device needs to perform frequency band switching to measure the PRSs that are from the TRP 2 and that are on the two frequency bands. In addition, because a total bandwidth of the two frequency bands (the frequency band 1 and the frequency band 2) of the TRP 1 is 100 MHz, and a total bandwidth of the two frequency bands (the frequency band 2 and the frequency band 3) of the TRP 2 is 150 MHz, after measuring the PRSs that are from the TRP 1 and that are on the two frequency bands, the terminal device may further need to change a size of fast Fourier transform (fast Fourier transform, FFT) in baseband signal processing (that is, perform FFT switching), to measure the PRSs that are from the TRP 2 and that are on the two frequency bands.

Similarly, after measuring the PRSs that are from the TRP 2 and that are on the two frequency bands, the terminal device needs to perform frequency band switching and FFT switching, to measure the PRSs that are from the TRP 3 and that are on the two frequency bands. It can be learned from this that when measuring the PRSs from the TRP 1, the TRP 2, and the TRP 3, the terminal device needs to perform frequency band switching twice and perform FFT switching twice. However, because both frequency band switching and FFT switching increase processing complexity of the terminal device, power consumption of the terminal device increases and costs increase.

In view of this, embodiments of this application provide a communication method, to lower processing complexity of measuring a reference signal by a terminal device in a CA positioning scenario.

For example, the communication method may include: The terminal device determines priorities of a plurality of TRPs, and measures PRSs from the plurality of TRPs based on the priorities of the plurality of TRPs. The priorities of the plurality of TRPs represent a sequence in which the terminal device measures the PRSs from the plurality of TRPs. For example, if a priority of a TRP 1 is higher than a priority of a TRP 2, the terminal device may first measure a PRS from the TRP 1, and then measure a PRS from the TRP 2. The priority of the TRP is introduced, to reduce frequency band switching and/or FFT switching, and lower processing complexity of the terminal device.

Considering that the terminal device may not support simultaneously measuring PRSs from two or more TRPs, when the priority of the TRP 1 is the same as the priority of the TRP 2, the terminal device may first measure the PRS from the TRP 1, and then measure the PRS from the TRP 2; or the terminal device may first measure the PRS from the TRP 2, and then measure the PRS from the TRP 1. Specifically, this depends on internal implementation of the terminal device. This is not limited in embodiments of this application.

There may be a plurality of manners in which the terminal device determines the priorities of the plurality of TRPs. For example, the terminal device may determine the priorities of the plurality of TRPs according to a predefined or preconfigured priority rule. For another example, the terminal device may determine the priorities of the plurality of TRPs based on first information sent by a positioning server.

The following describes in detail the communication method provided in embodiments of this application with reference to specific embodiments. In specific embodiments, an example in which the method provided in embodiments of this application is applied to the communication system shown in FIG. 1A or FIG. 1B is used. In addition, the method provided in embodiments of this application may be performed by a first communication apparatus and a second communication apparatus. The first communication apparatus may be a terminal device, or may be a chip, a chip system, or a processor that supports the terminal device implementing the method. The second communication apparatus may be a positioning server, or may be a chip, a chip system, or a processor that supports the positioning server implementing the method.

**Embodiment 1**

In Embodiment 1, an example in which "a terminal device determines priorities of a plurality of TRPs according to a predefined or preconfigured priority rule" is used for description.

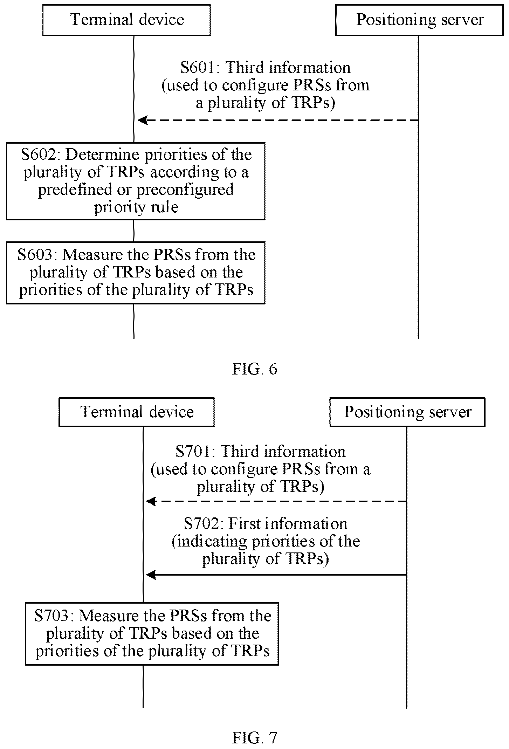

**FIG. 6** is a schematic flowchart corresponding to a communication method according to Embodiment 1 of this application. As shown in FIG. 6, the method includes the following steps.

**S601:** A positioning server sends third information to a terminal device, where the third information is used to configure PRSs from a plurality of TRPs. Correspondingly, the terminal device receives the third information.

Herein, the third information may also be referred to as PRS configuration information of the plurality of TRPs. That the third information is used to configure the PRSs from the plurality of TRPs may mean that the third information is used to configure PRS resource sets from the plurality of TRPs, for example, the PRS resource sets from the plurality of TRPs shown in FIG. 3B. There are a plurality of manners in which the positioning server sends the third information to the terminal device. For example, the positioning server may send the third information to the terminal device in a form of assistance data, or the positioning server may send the third information to the terminal device by using LPP signaling.

It may be understood that communication between the positioning server and the terminal device may be implemented through forwarding between an AMF network element and a TRP. For example, a path for the positioning server to send the third information to the terminal device is: positioning server → AMF network element → TRP → terminal device. The AMF network element and the TRP may transparently forward the third information, or may forward processed third information. This is not limited in this embodiment of this application.

(1) Describe a reference TRP and a reference frequency band group.

The reference TRP may be one of the plurality of TRPs. If the reference TRP is associated with a plurality of frequency bands, the reference frequency band group may include at least two of the plurality of frequency bands. That the reference TRP is associated with a plurality of frequency bands may mean that the reference TRP configures PRSs (or configures PRS resource sets) on the plurality of frequency bands. For example, if the reference TRP is the TRP 1 shown in FIG. 3B, and the TRP 1 configures PRS resource sets on the frequency band 1 and the frequency band 2, the reference frequency band group may include the frequency band 1 and the frequency band 2. For another example, if the reference TRP is the TRP 4 shown in FIG. 3B, and the TRP 4 configures PRS resource sets on the frequency band 1 to the frequency band 4, the reference frequency band group may include at least two of the frequency band 1 to the frequency band 4.

The reference TRP and the reference frequency band group may be used for CA positioning measurement. For details, refer to the foregoing descriptions about CA positioning measurement.

**In a possible implementation,** the reference TRP and/or the reference frequency band group may be determined by the terminal device. For example, after receiving the third information, the terminal device may select one TRP from the plurality of TRPs as the reference TRP. Further, the terminal device may select at least two frequency bands from the plurality of frequency bands associated with the reference TRP as the reference frequency band group.

**In another possible implementation,** the reference TRP and/or the reference frequency band group may be indicated by the positioning server to the terminal device. For example, the positioning server may send fourth information to the terminal device, where the fourth information indicates the reference TRP and/or the reference frequency band group. The positioning server may send the third information and the fourth information to the terminal device by using same signaling, or may send the third information and the fourth information to the terminal device by using different signaling. The positioning server indicates the reference TRP and/or the reference frequency band group to the terminal device, so that ambiguity of selecting the reference TRP and/or the reference frequency band group by the terminal device during CA positioning measurement can be avoided. This helps lower processing complexity.

Specifically, there may be a plurality of manners in which the fourth information indicates the reference TRP. For example, the fourth information includes an identifier of the reference TRP. There may also be a plurality of manners in which the fourth information indicates the reference frequency band group. The following describes three possible manners: Manner 1, Manner 2, and Manner 3.

**Manner 1**

The fourth information includes identifiers of a plurality of frequency bands included in the reference frequency band group, in other words, the reference frequency band group may be indicated by using the identifiers of the plurality of frequency bands included in the reference frequency band group. For example, if the reference frequency band group includes a frequency band 1 and a frequency band 2, the fourth information may include an identifier of the frequency band 1 and an identifier of the frequency band 2.

An identifier of a frequency band may include one or more of the following:

① an identifier of a frequency corresponding to the frequency band, for example, an absolute radio frequency channel number (absolute ratio frequency channel number, ARFCN); and
② an identifier of a cell corresponding to the frequency band, for example, a physical cell identifier (physical cell identifier, PCI) or a global cell identifier (global cell identify, GCI).

**Manner 2**

The fourth information includes identifiers of PRS resource sets corresponding to PRSs on the reference frequency band group, in other words, the reference frequency band group may be indicated by using the identifiers of the PRS resource sets. The PRSs on the reference frequency band group may be PRSs from the reference TRP, or may be PRSs from another possible TRP. In this embodiment of this application, an example in which the PRSs on the reference frequency band group are PRSs from the reference TRP is used, in other words, the reference frequency band group is indicated by using identifiers of PRS resource sets from the reference TRP.

For example, the reference TRP is a TRP 1, and the fourth information includes identifiers of a PRS resource set 1 and a PRS resource set 2. Because the PRS resource set 1 from the TRP 1 is configured on a frequency band 1, and the PRS resource set 2 from the TRP 1 is configured on a frequency band 2, the terminal device may determine that the reference frequency band group includes the frequency band 1 and the frequency band 2.

**Manner 3**

Manner 1 and Manner 2 may be understood as that the fourth information explicitly indicates the reference frequency band group. In Manner 3, the fourth information may alternatively implicitly indicate the reference frequency band group. For example, the fourth information implicitly indicates that the reference frequency band group includes all frequency bands associated with the reference TRP. For example, the fourth information includes only the identifier of the reference TRP. In this case, the terminal device may determine the reference TRP based on the fourth information, and determine that the reference frequency band group includes all frequency bands associated with the reference TRP.

The following describes a possible format of the fourth information with reference to Table 2 by using an example in which the fourth information includes the identifier of the TRP and identifiers of PRS resource sets corresponding to PRSs on the reference frequency band group.

Table 2: Example of a format of the fourth information

```
NR-DL-PRS-AssistanceData-r16 ::= SEQUENCE {    //PRS assistance data information

    ...
        DL-PRS-ID-InfoCA-r18 ::=SEQUENCE {    //CA positioning scenario
            dl-PRS-ID-r16                INTEGER (0..255),    //identifier of a reference TRP
            referenceResourceSetIDList-r18          SEQUENCE (SIZE(2..nrMaxResourceSetIDs-r16)) OF
NR-DL-PRS-ResourceSetID-r16      //identifiers of PRS resource sets corresponding to PRSs on a reference
frequency band group      OPTIONAL
    }
}
```

In the example shown in Table 2, an nr-DL-PRS-ReferenceInfoCA-r18 field may be added to the NR-DL-PRS-AssistanceData-r16 parameter. The field indicates information that needs to be referenced when the terminal device performs CA positioning measurement. Specifically, the field may include a dl-PRS-ID-r16 field and a referenceResourceSetIDList-rl8 field. The dl-PRS-ID-r16 field is used to carry the identifier of the reference TRP, and the referenceResourceSetIDList-rl8 field is used to carry the identifiers of the PRS resource sets corresponding to the PRSs on the reference frequency band group.

It may be understood that the foregoing two possible implementations may alternatively be implemented in combination. For example, the positioning server indicates the reference TRP to the terminal device, and the terminal device independently determines the reference frequency band group; or the positioning server indicates the reference frequency band group to the terminal device, and the terminal device independently determines the reference TRP. This is not specifically limited.


(2) Describe a frequency band expected by the terminal device.

For example, the positioning server may obtain a frequency band expected (on-demand) by the terminal device, and send the third information (that is, the configuration information of the plurality of TRPs) to the terminal device based on the frequency band expected by the terminal device. The frequency band expected by the terminal device may be a frequency band supported (or available) by the terminal device for CA positioning measurement, or a frequency band on which the terminal device expects to perform CA positioning measurement. For example, if frequency bands expected by the terminal device include a frequency band 1, a frequency band 2, a frequency band 3, and a frequency band 4, the positioning server may determine that TRPs that configure PRS resource sets on at least two of the frequency band 1, the frequency band 2, the frequency band 3, or the frequency band 4, and send PRS configuration information of the TRPs to the terminal device. In other words, the PRSs from the plurality of TRPs configured by using the third information are on the frequency band expected by the terminal device.

For example, a TRP 1 is used as an example. If the positioning server determines that the TRP 1 configures PRS resource sets on the frequency band 1, the frequency band 2, and a frequency band 5, the positioning server may send PRS configuration information of the TRP 1 to the terminal device, where the PRS configuration information of the TRP 1 is used to configure PRS resource sets that are from the TRP 1 and that are on the frequency band 1 and the frequency band 2. Because the frequency band 5 does not belong to the frequency bands expected by the terminal device, the positioning server does not need to send, to the terminal device, PRS configuration information used to configure a PRS resource set that is from the TRP 1 and that is on the frequency band 5.

There are a plurality of manners in which the positioning server obtains the frequency band expected by the terminal device. For example, before S601, the terminal device may send second information to the positioning server, where the second information indicates at least one frequency band expected by the terminal device. Correspondingly, the positioning server may determine, based on the second information, the frequency band expected by the terminal device. For example, the terminal device may actively send the second information to the positioning server, or the terminal device may send the second information to the positioning server based on a request of the positioning server. For example, the positioning server sends request information to the terminal device, where the request information is used to request the frequency band expected by the terminal device. Further, after receiving the request information, the terminal device may send the second information to the positioning server.

In this way, because the positioning server sends the PRS configuration information of the plurality of TRPs to the terminal device based on the frequency band expected by the terminal device, this does not only help meet a measurement requirement on a terminal device side, but also reduces a waste of configuration resources and improves resource utilization.

It should be noted that S601 is an optional step, in other words, S601 may not be performed. In this case, the terminal device may determine configuration of the PRSs from the plurality of TRPs in another manner.

**S602:** The terminal device determines priorities of the plurality of TRPs according to a predefined or preconfigured priority rule.

For example, the priority rule includes: A priority of a TRP whose PRSs are on a first frequency band group is higher than a priority of a TRP whose PRSs are on the second frequency band group; and/or the priority of the TRP whose PRSs are on the second frequency band group is higher than a priority of a TRP whose PRSs are on the third frequency band group. Alternatively, it may be described as that the priority rule includes: A priority of a first frequency band group is higher than a priority of a second frequency band group, and/or the priority of the second frequency band group is higher than a priority of a third frequency band group.

The first frequency band group is the reference frequency band group, a total bandwidth of the first frequency band group is the same as a total bandwidth of the second frequency band group, and the total bandwidth of the first frequency band group is different from a total bandwidth of the third frequency band group. In addition, frequency bands included in the second frequency band group and the first frequency band group are at least partially different, and frequency bands included in the third frequency band group and the first frequency band group are at least partially different.

According to the foregoing priority rule, an example in which the plurality of TRPs include the TRP 1, the TRP 2, the TRP 3, and the TRP 4 shown in FIG. 3B is used. After determining that the reference frequency band group (that is, the first frequency band group) is {frequency band 1, and frequency band 2}, the terminal device may determine the second frequency band group and the third frequency band group based on bandwidths of the frequency band 1, the frequency band 2, the frequency band 3, and the frequency band 4. For example, the second frequency band group may be {frequency band 3, and frequency band 4}, and the third frequency band group may be {frequency band 2, and frequency band 3}. Further, because PRSs from the TRP 1 are on the first frequency band group, PRSs from the TRP 2 are on the third frequency band group, PRSs from the TRP 3 are on the second frequency band group, and a frequency band group on which PRSs from the TRP 4 are located includes the first frequency band group, the terminal device may determine that a priority of the TRP 1 is higher than a priority of the TRP 3, the priority of the TRP 3 is higher than a priority of the TRP 2, and a priority of the TRP 4 is the same as the priority of the TRP 1.

It may be understood that, the TRP 1 is used as an example, that the PRSs from the TRP 1 are on the first frequency band group may mean that the TRP 1 configures PRSs (in other words, configures PRS resource sets) on all frequency bands included in the first frequency band group.

The foregoing descriptions are provided by using an example in which numbers of the frequency bands included in the frequency band group are consecutive. If the numbers of the frequency bands included in the frequency band group may be consecutive or may be inconsecutive, the second frequency band group may be {frequency band 3, and frequency band 4}, {frequency band 1, and frequency band 3}, or {frequency band 2, and frequency band 4}, and the third frequency band group may be {frequency band 2, and frequency band 3}, or {frequency band 1, and frequency band 4}.

**S603:** The terminal device measures the PRSs from the plurality of TRPs based on the priorities of the plurality of TRPs.

For example, the TRP 1, the TRP 2, and the TRP 3 are used as an example. Because the priority of the TRP 1 is higher than the priority of the TRP 3, and the priority of the TRP 3 is higher than the priority of the TRP 2, the terminal device may first measure the PRSs from the TRP 1, then measure the PRSs from the TRP 3, and finally measure the PRSs from the TRP 2. That is, a measurement sequence of the terminal device may be: the TRP 1, the TRP 3, and the TRP 2. The TRP 1 is used as an example, measuring the PRSs from the TRP 1 means that CA positioning measurement is performed on the PRSs that are from the TRP 1 and that are on the frequency band 1 and the frequency band 2.

Because total bandwidths of the frequency band group (the frequency band 1 and the frequency band 2) associated with the TRP 1 and the frequency band group (the frequency band 3 and the frequency band 4) associated with the TRP 3 are the same, after measuring the PRSs that are from the TRP 1 and that are on the two frequency bands, the terminal device may perform frequency band switching (without performing FFT switching), to measure the PRSs that are from the TRP 3 and that are on the two frequency bands. After measuring the PRSs that are from the TRP 3 and that are on the two frequency bands, the terminal device may perform frequency band switching and FFT switching, to measure the PRSs that are from the TRP 2 and that are on the two frequency bands. It can be learned from this that when measuring the PRSs from the TRP 1, the TRP 2, and the TRP 3, the terminal device needs to perform frequency band switching twice and perform FFT switching once. In comparison with that "the terminal device sequentially measures the PRSs from the TRP 1, the TRP 2, and the TRP 3" in the foregoing descriptions, a quantity of times of frequency band switching and/or FFT switching can be reduced, and complexity of baseband implementation and radio frequency implementation when the terminal device performs CA positioning measurement can be lowered.

In addition, because the priority of the TRP 4 is the same as the priority of the TRP 1, the terminal device may first measure the PRSs from the TRP 1, and then measure the PRSs from the TRP 4, or may first measure the PRSs from the TRP 4, and then measure the PRSs from the TRP 1. Measuring the PRSs from the TRP 4 refers to measuring the PRSs that are from the TRP 4 and that are on the first frequency band group. For example, for the TRP 1, the TRP 2, the TRP 3, and the TRP 4, a measurement sequence of the terminal device may be the TRP 1, the TRP 4, the TRP 3, and the TRP 2, or may be the TRP 4, the TRP 1, the TRP 3, and the TRP 2.

For example, after measuring the PRSs from the plurality of TRPs, the terminal device may report a measurement result to the positioning server, so that the positioning server calculates a position of the terminal device based on the measurement result. Optionally, the terminal device may further send fifth information to the positioning server, where the fifth information indicates the reference TRP and/or the reference frequency band group. For example, if the reference TRP and/or the reference frequency band group are/is independently determined by the terminal device, or although the positioning server indicates the reference TRP and/or the reference frequency band group, the terminal device does not use the reference TRP and/or the reference frequency band group indicated by the positioning server, the terminal device may send the fifth information to the positioning server.

According to the foregoing method, the terminal device measures the PRSs from the plurality of TRPs based on the priorities of the plurality of TRPs. This helps reduce frequency band switching and/or FFT switching, and lower processing complexity of the terminal device. Further, because the terminal device determines the priorities of the plurality of TRPs according to the preconfigured or predefined priority rule, no additional signaling overheads are introduced, to help save transmission resources.

**Embodiment 2**

In Embodiment 2, an example in which "a terminal device determines priorities of a plurality of TRPs based on first information sent by a positioning server" is used for description.

**FIG. 7** is a schematic flowchart corresponding to a communication method according to Embodiment 2 of this application. As shown in FIG. 7, the method includes the following steps.

**S701:** A positioning server sends third information to a terminal device, where the third information is used to configure PRSs from a plurality of TRPs. Correspondingly, the terminal device receives the third information.

Herein, for related implementation of **S701,** refer to the description of S601 in Embodiment 1.

**S702:** The positioning server sends first information to the terminal device, where the first information indicates the priorities of the plurality of TRPs. Correspondingly, the terminal device receives the first information, and determines the priorities of the plurality of TRPs based on the first information.

(1) Describe the first information.

There are a plurality of specific indication manners in which the first information indicates the priorities of the plurality of TRPs.

**In a possible implementation,** the first information may include the priorities of the plurality of TRPs. In this case, the terminal device may directly obtain the priorities of the plurality of TRPs based on the first information. For example, the first information may include a TRP priority list, and in the TRP priority list, a priority of a former TRP is higher than a priority of a latter TRP. For example, if the TRP list is {TRP 1, TRP 3, and TRP 2}, it indicates that a priority of the TRP 1 is higher than a priority of the TRP 3, and the priority of the TRP 3 is higher than a priority of the TRP 2.

Table 3 shows an example of a format of the first information.

Table 3: Example of a format of the first information

```
NR-DL-TDOA-RequestLocationInformation-r16 ::= SEQUENCE {
    ...
    FrequencylayerMeasConfigForCA-r18          SEQUENCE {    // TRP priority list
        DL-PRS-ID -1; // identifier of the TRP 1
        DL-PRS-ID -2 ; // identifier of the TRP 2
        DL-PRS-ID -3 ; // identifier of the TRP 3
    }
}
```

In the example shown in Table 3, a FrequencylayerMeasConfigForCA-r18 field may be added to the NR-DL-TDOA-RequestLocationInformation-r16 parameter, and the field is used to carry the TRP priority list.

**In still another possible implementation,** the first information includes priorities of a plurality of frequency band groups. In this case, the terminal device may determine the priorities of the plurality of TRPs based on the priorities of the plurality of frequency band groups. For example, the first information includes a frequency band group priority list, and the frequency band group priority list includes identifiers of the plurality of frequency band groups. The identifiers of the frequency band group may be identifiers of a plurality of frequency bands included in the frequency band group, or may be other information used to identify the frequency band group. This is not specifically limited. In the frequency band group priority list, a priority of a former frequency band group is higher than a priority of a latter frequency band group.

For example, if the frequency band group priority list is {frequency band group 1, frequency band group 2, and frequency band group 3}, it indicates that a priority of the frequency band group 1 is higher than a priority of the frequency band group 2, and the priority of the frequency band group 2 is higher than a priority of the frequency band group 3. In this case, the frequency band group 1 is used as an example. If the TRP 1 is associated with the frequency band group 1 (that is, the TRP configures PRS resource sets on all frequency bands included in the frequency band group 1), the terminal device may determine that the priority of the TRP 1 is the priority of the frequency band group 1.

Table 4 shows an example of a format of the first information.

Table 4: Example of a format of the first information

```
NR-DL-TDOA-RequestLocationInformation-r16 ::= SEQUENCE {

    ...
    FrequencylayerMeasConfigForCA-r18              SEQUENCE {    // frequency band group priority list
        positioningfrequencylayer -1 ; // identifier of the frequency band group 1
      positioningfrequencylayer -2 ; // identifier of the frequency band group 2
      positioningfrequencylayer -3 ; // identifier of the frequency band group 3
    }
}
```

In the example shown in Table 4, a FrequencylayerMeasConfigForCA-r18 field may be added to the NR-DL-TDOA-RequestLocationInformation-r16 parameter, and the field is used to carry the frequency band group priority list.

**(2)** Describe a manner in which the positioning server determines the first information.

For example, there are a plurality of manners in which the positioning server determines the first information. For example, the positioning server may determine the first information according to a predefined or preconfigured priority rule.

For example, the priority rule includes: A priority of a TRP whose PRSs are on a first frequency band group is higher than a priority of a TRP whose PRSs are on a second frequency band group; and/or the priority of the TRP whose PRSs are on the second frequency band group is higher than a priority of a TRP whose PRSs are on a third frequency band group. Alternatively, it may be described as that the priority rule includes: A priority of a first frequency band group is higher than a priority of a second frequency band group, and/or the priority of the second frequency band group is higher than a priority of a third frequency band group. The first frequency band group is a reference frequency band group, a total bandwidth of the first frequency band group is the same as a total bandwidth of the second frequency band group, and the total bandwidth of the first frequency band group is different from a total bandwidth of the third frequency band group. In addition, frequency bands included in the second frequency band group and the first frequency band group are at least partially different, and frequency bands included in the third frequency band group and the first frequency band group are at least partially different.

According to the foregoing priority rule, an example in which the plurality of TRPs include the TRP 1, the TRP 2, the TRP 3, and the TRP 4 shown in FIG. 3B is used. It is assumed that the positioning server indicates a reference TRP and the reference frequency band group to the terminal device. After determining that the reference frequency band group (that is, the first frequency band group) is {frequency band 1, and frequency band 2}, the positioning server may determine the second frequency band group and the third frequency band group based on bandwidths of the frequency band 1, the frequency band 2, the frequency band 3, and the frequency band 4. For example, the second frequency band group may be {frequency band 3, and frequency band 4}, and the third frequency band group may be {frequency band 2, and frequency band 3}.

In this case, if the first information includes the frequency band group priority list, the frequency band group priority list may be {first frequency band group (frequency band 1 and frequency band 2), second frequency band group (frequency band 3 and frequency band 4), and third frequency band group (frequency band 2 and frequency band 3)}. It may be understood that the positioning server may also implicitly indicate the reference frequency band group by using the frequency band group priority list. For example, a frequency band group with a highest priority in the frequency band group priority list is the reference frequency band group.

Alternatively, because PRSs from the TRP 1 are on the first frequency band group, PRSs from the TRP 2 are on the third frequency band group, PRSs from the TRP 3 are on the second frequency band group, and the frequency band group on which PRSs from the TRP 4 are located includes the first frequency band group, if the first information includes the TRP priority list, the TRP priority list may be {TRP 1, TRP 4, TRP 3, and TRP 2}; or the TRP priority list may alternatively be {TRP 4, TRP 1, TRP 3, and TRP 2}. In this manner, an example in which the TRP priority list is {TRP 1, TRP 4, TRP 3, and TRP 2} is used. From a perspective of the terminal device (that is, in S703), after the terminal device measures the PRSs that are from the TRP 1 and that are on the first frequency band group, because the frequency band group on which the PRSs from the TRP 4 are located includes the first frequency band group, the terminal device may measure the PRSs that are from the TRP 4 and that are on the first frequency band group. In other words, when a frequency band group on which PRSs from a specific TRP are located includes a plurality of frequency band groups, the terminal device may measure the PRSs from the TRP based on a principle of reducing frequency band switching and/or FFT switching.

It should be noted that a specific implementation in which the positioning server determines the priority of the TRP or the priority of the frequency band group is not limited in this embodiment of this application.

For example, the positioning server may send the third information and the first information to the terminal device by using same signaling, or may send the third information and the first information to the terminal device by using different signaling.

**S703:** The terminal device measures the PRSs from the plurality of TRPs based on the priorities of the plurality of TRPs.

Herein, for related implementation of **S703,** refer to the description of S603 in Embodiment 1.

According to the foregoing method, the positioning server indicates the priorities of the plurality of TRPs to the terminal device, so that flexibility of controlling the terminal device by the positioning server is improved. In addition, the priorities of the plurality of TRPs may be determined by the positioning server according to the priority rule. Therefore, when the terminal device measures the PRSs from the plurality of TRPs based on the priorities of the plurality of TRPs, frequency band switching and/or FFT switching can be effectively reduced, and processing complexity of the terminal device can be lowered.

For the foregoing embodiments, it may be understood that:

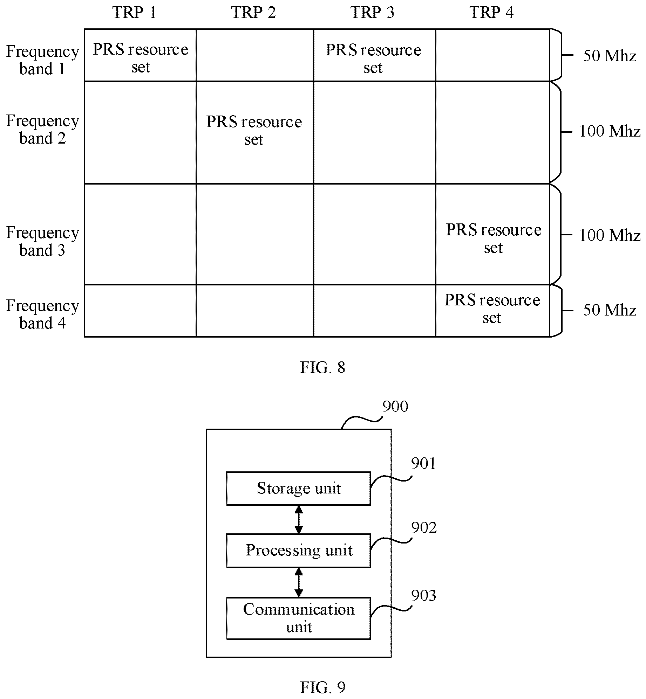

(1) The foregoing embodiments are described by using a CA positioning measurement scenario as an example. The solutions provided in embodiments of this application are also applicable to a non-CA positioning measurement scenario. For example, FIG. 8 is an example of PRS resource sets from a plurality of TRPs. A TRP 1 configures a PRS resource set on a frequency band 1, a TRP 2 configures a PRS resource set on a frequency band 2, a TRP 3 configures a PRS resource set on the frequency band 1, and a TRP 4 configures PRS resource sets on a frequency band 3 and a frequency band 4. In this case, if the terminal device sequentially measures PRSs from the plurality of TRPs, for example, sequentially measures a PRS that is from the TRP 1 and that is on the frequency band 1, a PRS that is from the TRP 2 and that is on the frequency band 2, and a PRS that is from the TRP 3 and that is on the frequency band 1, frequency band switching needs to be performed twice and FFT switching needs to be performed twice. Therefore, a priority of a TRP may also be introduced to reduce frequency band switching and/or FFT switching. For specific implementation, reference may be made to the foregoing embodiments.

(2) Step numbers of the flowcharts described in Embodiment 1 and Embodiment 2 are merely examples of executing the procedures, and do not constitute a limitation on a sequence of performing the steps. In embodiments of this application, there is no strict execution sequence among steps that do not have a time sequence dependency relationship with each other. Not all steps shown in each flowchart are necessarily performed steps; and some steps may be deleted based on each flowchart based on an actual requirement, or other possible steps may be added based on each flowchart based on an actual requirement.

(3) The foregoing focuses on differences between different embodiments, different implementations, and different examples; and for other content than the differences, different embodiments may be mutually referenced, or in a same embodiment, different implementations or different examples may also be mutually referenced.

The foregoing mainly describes the solutions provided in embodiments of this application from a perspective of interaction between communication apparatuses. It may be understood that, to implement the foregoing functions, the network device and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network device and the terminal device based on the foregoing method examples. For example, division into each functional unit may be based on each corresponding function, or two or more functions may be integrated into one unit. The integrated unit may be implemented in a form of hardware, or may be implemented in a form of a software functional unit.

When an integrated unit is used, **FIG. 9** is a block diagram of a possible example of an apparatus according to an embodiment of this application. As shown in FIG. 9, the apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, configured to perform receiving and sending operations respectively. Alternatively, the communication unit 903 is also referred to as a transceiver or a transceiver machine. The apparatus 900 may further include a storage unit 901 that is configured to store program code and/or data of the apparatus 900.

(1) The apparatus 900 may be the terminal device in the foregoing embodiments. The processing unit 902 may support the apparatus 900 performing actions of the terminal device in the foregoing method examples. Alternatively, the processing unit 902 mainly performs an internal action of the terminal device in the method examples, and the communication unit 903 may support communication between the apparatus 900 and another device.

For example, in an embodiment, the processing unit 902 is configured to determine priorities of a plurality of transmission and reception points TRPs; and measure reference signals from the plurality of TRPs based on the priorities of the plurality of TRPs, where the priorities of the plurality of TRPs are: a priority of a first TRP is higher than a priority of a second TRP, and/or the priority of the second TRP is higher than a priority of a third TRP; reference signals from the first TRP are on a first frequency band group, and the first frequency band group is a reference frequency band group; reference signals from the second TRP are on a second frequency band group, and a total bandwidth of the first frequency band group is the same as a total bandwidth of the second frequency band group; and reference signals from the third TRP are on a third frequency band group, and the total bandwidth of the first frequency band group is different from a total bandwidth of the third frequency band group.

In a possible design, the processing unit 902 is specifically configured to determine the priorities of the plurality of TRPs according to a predefined or preconfigured priority rule.

In a possible design, the priority rule includes: the priority of the TRP whose reference signals are on the first frequency band group is higher than the priority of the TRP whose reference signals are on the second frequency band group; and/or the priority of the TRP whose reference signals are on the second frequency band group is higher than the priority of the TRP whose reference signals are on the third frequency band group.

In a possible design, the communication unit 903 is configured to receive first information from a positioning server, where the first information indicates the priorities of the plurality of TRPs; and the processing unit 902 is specifically configured to determine the priorities of the plurality of TRPs based on the first information.

In a possible design, the first information includes priorities of a plurality of frequency band groups, and the priorities of the plurality of frequency band groups are: a priority of the first frequency band group is higher than a priority of the second frequency band group; and/or the priority of the second frequency band group is higher than a priority of the third frequency band group.

In a possible design, the communication unit 903 is further configured to send second information to the positioning server, where the second information indicates at least one frequency band expected by the terminal device; and receive third information from the positioning server, where the third information is used to configure the reference signals from the plurality of TRPs, and the reference signals from the plurality of TRPs are on the at least one frequency band.

In a possible design, the communication unit 903 is further configured to receive request information from the positioning server, where the request information is used to request the frequency band expected by the terminal device, the request information includes a plurality of candidate frequency bands, and the at least one frequency band belongs to the plurality of candidate frequency bands.

In a possible design, the communication unit 903 is further configured to receive fourth information from the positioning server, where the fourth information indicates the reference frequency band group.

In a possible design, the fourth information includes identifiers of a plurality of frequency bands included in the reference frequency band group, or identifiers of reference signal resource sets corresponding to reference signals on the reference frequency band group.

(2) The apparatus 900 may be the positioning server in the foregoing embodiments. The processing unit 902 may support the apparatus 900 performing the actions of the positioning server in the foregoing method examples. Alternatively, the processing unit 902 mainly performs an internal action of the positioning server in the method example, and the communication unit 903 may support communication between the apparatus 900 and another device.

For example, in an embodiment, the processing unit 902 is configured to determine priorities of the plurality of TRPs; and the communication unit 903 is configured to send first information to a terminal device, where the first information indicates the priorities of the plurality of TRPs. The priorities of the plurality of TRPs are: a priority of a first TRP is higher than a priority of a second TRP, and/or the priority of the second TRP is higher than a priority of a third TRP; reference signals from the first TRP are on a first frequency band group, and the first frequency band group is a reference frequency band group; reference signals from the second TRP are on a second frequency band group, and a total bandwidth of the first frequency band group is the same as a total bandwidth of the second frequency band group; and reference signals from the third TRP are on a third frequency band group, and the total bandwidth of the first frequency band group is different from a total bandwidth of the third frequency band group.

In a possible design, the processing unit 902 is specifically configured to determine the priorities of the plurality of TRPs according to a predefined or preconfigured priority rule.

In a possible design, the priority rule includes: the priority of the TRP whose reference signals are on the first frequency band group is higher than the priority of the TRP whose reference signals are on the second frequency band group; and/or the priority of the TRP whose reference signals are on the second frequency band group is higher than the priority of the TRP whose reference signals are on the third frequency band group.

In a possible design, the first information includes priorities of a plurality of frequency band groups, and the priorities of the plurality of frequency band groups are: a priority of the first frequency band group is higher than a priority of the second frequency band group; and/or the priority of the second frequency band group is higher than a priority of the third frequency band group.

In a possible design, the communication unit 903 is further configured to: receive second information from the terminal device, where the second information indicates at least one frequency band expected by the terminal device; and send third information to the terminal device, where the third information is used to configure reference signals from the plurality of TRPs, and the reference signals from the plurality of TRPs are on the at least one frequency band.

In a possible design, the communication unit 903 is further configured to send request information to the terminal device, where the request information is used to request the frequency band expected by the terminal device, the request information includes a plurality of candidate frequency bands, and the at least one frequency band belongs to the plurality of candidate frequency bands.

In a possible design, the communication unit 903 is further configured to send fourth information to the terminal device, where the fourth information indicates the reference frequency band group.

In a possible design, the fourth information includes identifiers of a plurality of frequency bands included in the reference frequency band group, or identifiers of reference signal resource sets corresponding to reference signals on the reference frequency band group.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing method, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these types of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

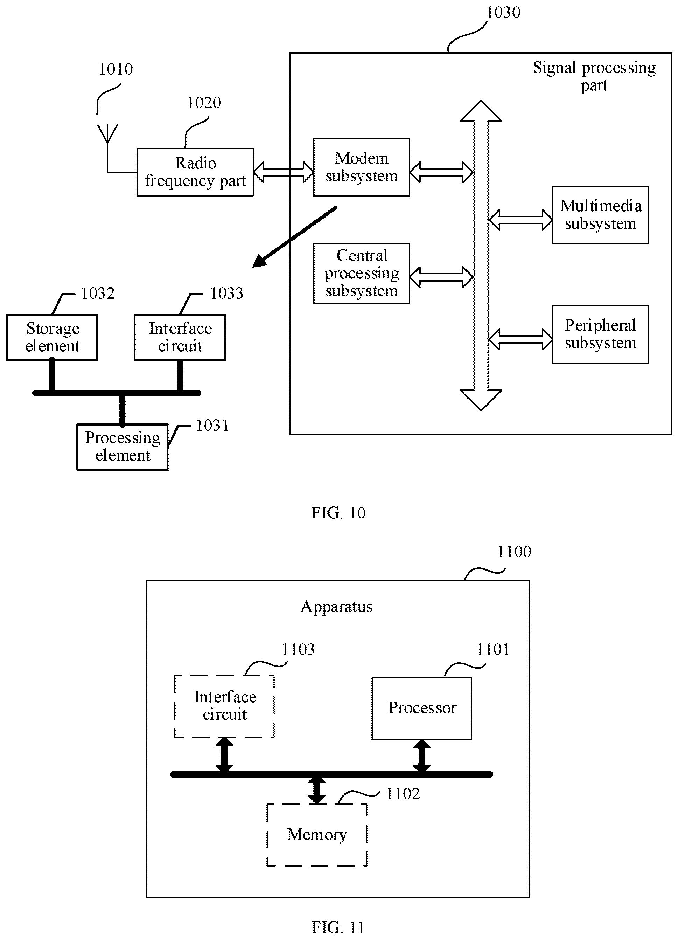

**FIG. 10** is a diagram of a structure of a terminal device according to an embodiment of this application. The terminal device may be used in the communication system shown in FIG. 1A or FIG. 1B, to implement operations of the terminal device in the foregoing embodiments. As shown in FIG. 10, the terminal device includes: an antenna 1010, a radio frequency part 1020, and a signal processing part 1030. The antenna 1010 is connected to the radio frequency part 1020. In a downlink direction, the radio frequency part 1020 receives, through the antenna 1010, information sent by a network device; and sends, to the signal processing part 1030 for processing, the information sent by the network device. In an uplink direction, the signal processing part 1030 processes the information of the terminal device, and sends the processed information to the radio frequency part 1020; and the radio frequency part 1020 processes the information of the terminal device, and then sends the processed information to the network device through the antenna 1010.

The signal processing part 1030 may include a modem subsystem, configured to process data at each communication protocol layer; may further include a central processing subsystem, configured to process an operating system and an application layer that are of the terminal device; and may further include another subsystem, for example, a multimedia subsystem, or a peripheral subsystem. The multimedia subsystem is configured to control a camera or screen display of the terminal device. The peripheral subsystem is configured to connect to another device. The modem subsystem may be a separately disposed chip.

The modem subsystem may include one or more processing elements 1031, for example, include a main control CPU and another integrated circuit. In addition, the modem subsystem may further include a storage element 1032 and an interface circuit 1033. The storage element 1032 is configured to store data and a program. However, a program used to perform the methods performed by the terminal device in the foregoing methods may not be stored in the storage element 1032, but is stored in a memory outside the modem subsystem, and is loaded and used by the modem subsystem when to be used. The interface circuit 1033 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is on a same chip, that is, an on-chip storage element.

In another implementation, the program used to perform the method performed by the terminal device in the foregoing method may be in a storage element on a different chip from the processing element, that is, an off-chip storage element. In this case, the processing element invokes or loads the program from the off-chip storage element to an on-chip storage element, to invoke and perform the method performed by the terminal device in the foregoing method embodiments.

In another implementation, units of the terminal device that implement the steps in the foregoing method may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. These integrated circuits may be integrated together to form a chip.

Units of the terminal device that implement the steps in the foregoing method may be integrated together, and implemented in a form of SoC. The SoC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logic circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 9. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 9. The storage element may be a memory, or may be a general name of a plurality of memories.

The terminal device shown in FIG. 10 can implement all processes related to the terminal device in the foregoing method embodiments. Operations and/or functions of the modules in the terminal device shown in FIG. 10 are intended to implement the corresponding procedures in the foregoing method embodiments. For details, refer to the descriptions in the foregoing method embodiments. To avoid repetition, detailed descriptions are properly omitted herein.

**FIG. 11** is a diagram of a structure of an apparatus according to an embodiment of this application. The apparatus 1100 may be the positioning server in the foregoing embodiments, and is configured to implement a function of the positioning server in the foregoing embodiments.

As shown in FIG. 11, the apparatus 1100 may include a processor 1101, a memory 1102, and an interface circuit 1103. The processor 1101 may be configured to process a communication protocol and communication data, and control the apparatus 1100. The memory 1102 may be configured to store a program and data, and the processor 1101 may perform, based on the program, the method performed by the apparatus 1100 in embodiments of this application. The interface circuit 1103 may be used by the apparatus 1100 to communicate with another device. The communication may be wired communication or wireless communication. The interface circuit may be a service-based interface.

Alternatively, the memory 1102 may be externally connected to the apparatus 1100. In this case, the apparatus 1100 may include an interface circuit 1103 and a processor 1101. Alternatively, the interface circuit 1103 may be externally connected to the apparatus 1100. In this case, the apparatus 1100 may include a memory 1102 and a processor 1101. When both the interface circuit 1103 and the memory 1102 are externally connected to the apparatus 1100, the apparatus 1100 may include a processor 1101.

The apparatus 1100 shown in FIG. 11 can implement processes of the apparatus 1100 in the foregoing method embodiments. Operations and/or functions of modules in the apparatus 1100 shown in FIG. 11 are separately used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies in this application.

**Claims**

1.   A communication method, wherein the method is applicable to a terminal device, and the method comprises:

determining priorities of a plurality of transmission and reception points TRPs; and
measuring reference signals from the plurality of TRPs based on the priorities of the plurality of TRPs, wherein the priorities of the plurality of TRPs are: a priority of a first TRP is higher than a priority of a second TRP, and/or the priority of the second TRP is higher than a priority of a third TRP;
reference signals from the first TRP are on a first frequency band group, and the first frequency band group is a reference frequency band group;
reference signals from the second TRP are on a second frequency band group, and a total bandwidth of the first frequency band group is the same as a total bandwidth of the second frequency band group; and
reference signals from the third TRP are on a third frequency band group, and the total bandwidth of the first frequency band group is different from a total bandwidth of the third frequency band group.

2.   The method according to claim 1, wherein determining the priorities of the plurality of TRPs comprises:
determining the priorities of the plurality of TRPs according to a predefined or preconfigured priority rule.

3.   The method according to claim 2, wherein the priority rule comprises:

the priority of the TRP whose reference signals are on the first frequency band group is higher than the priority of the TRP whose reference signals are on the second frequency band group; and/or
the priority of the TRP whose reference signals are on the second frequency band group is higher than the priority of the TRP whose reference signals are on the third frequency band group.

4.   The method according to claim 1, wherein determining the priorities of the plurality of TRPs comprises:

receiving first information from a positioning server, wherein the first information indicates the priorities of the plurality of TRPs; and
determining the priorities of the plurality of TRPs based on the first information.

5.   The method according to claim 4, wherein the first information comprises priorities of a plurality of frequency band groups, and the priorities of the plurality of frequency band groups are: a priority of the first frequency band group is higher than a priority of the second frequency band group; and/or the priority of the second frequency band group is higher than a priority of the third frequency band group.

6.   The method according to any one of claims 1 to 5, wherein the method further comprises:

sending second information to the positioning server, wherein the second information indicates at least one frequency band expected by the terminal device; and
receiving third information from the positioning server, wherein the third information is used to configure the reference signals from the plurality of TRPs, and the reference signals from the plurality of TRPs are on the at least one frequency band.

7.   The method according to claim 6, wherein the method further comprises:

receiving request information from the positioning server, wherein the request information is used to request the frequency band expected by the terminal device, wherein

the request information comprises a plurality of candidate frequency bands, and the at least one frequency band belongs to the plurality of candidate frequency bands.

8. The method according to any one of claims 1 to 7, wherein the method further comprises:
receiving fourth information from the positioning server, wherein the fourth information indicates the reference frequency band group.

9. The method according to claim 8, wherein the fourth information comprises:

identifiers of a plurality of frequency bands comprised in the reference frequency band group; or
identifiers of reference signal resource sets corresponding to the reference signals on the reference frequency band group.

10. A communication method, wherein the method is applicable to a positioning server, and the method comprises:

determining priorities of a plurality of TRPs; and
sending first information to a terminal device, wherein the first information indicates the priorities of the plurality of TRPs, wherein
the priorities of the plurality of TRPs are: a priority of a first TRP is higher than a priority of a second TRP, and/or the priority of the second TRP is higher than a priority of a third TRP;
reference signals from the first TRP are on a first frequency band group, and the first frequency band group is a reference frequency band group;
reference signals from the second TRP are on a second frequency band group, and a total bandwidth of the first frequency band group is the same as a total bandwidth of the second frequency band group; and
reference signals from the third TRP are on a third frequency band group, and the total bandwidth of the first frequency band group is different from a total bandwidth of the third frequency band group.

11. The method according to claim 10, wherein determining the priorities of the plurality of TRPs comprises:
determining the priorities of the plurality of TRPs according to a predefined or preconfigured priority rule.

12. The method according to claim 11, wherein the priority rule comprises:

the priority of the TRP whose reference signals are on the first frequency band group is higher than the priority of the TRP whose reference signals are on the second frequency band group; and/or
the priority of the TRP whose reference signals are on the second frequency band group is higher than the priority of the TRP whose reference signals are on the third frequency band group.

13. The method according to any one of claims 10 to 12, wherein the first information comprises priorities of a plurality of frequency band groups, and the priorities of the plurality of frequency band groups are: a priority of the first frequency band group is higher than a priority of the second frequency band group; and/or the priority of the second frequency band group is higher than a priority of the third frequency band group.

14. The method according to any one of claims 10 to 13, wherein the method further comprises:

receiving second information from the terminal device, wherein the second information indicates at least one frequency band expected by the terminal device; and
sending third information to the terminal device based on the second information, wherein the third information is used to configure reference signals from the plurality of TRPs, and the reference signals from the plurality of TRPs are on the at least one frequency band.

15. The method according to claim 14, wherein the method further comprises:

sending request information to the terminal device, wherein the request information is used to request the frequency band expected by the terminal device, wherein
the request information comprises a plurality of candidate frequency bands, and the at least one frequency band belongs to the plurality of candidate frequency bands.

16. The method according to any one of claims 10 to 15, wherein the method further comprises:

sending fourth information to the terminal device, wherein the fourth information indicates the reference frequency band group.

17. The method according to claim 16, wherein the fourth information comprises:

identifiers of a plurality of frequency bands comprised in the reference frequency band group; or
identifiers of reference signal resource sets corresponding to the reference signals on the reference frequency band group.

18. A communication apparatus, comprising a module or a unit configured to perform the method according to any one of claims 1 to 9.

19. A communication apparatus, comprising a module or a unit configured to perform the method according to any one of claims 10 to 17.

20. A communication apparatus, comprising a processor, wherein the processor is coupled to a memory, and the memory stores a computer program; and the processor is configured to invoke the computer program in the memory, to enable the communication apparatus to perform the method according to any one of claims 1 to 9.

21. A communication apparatus, comprising a processor, wherein the processor is coupled to a memory, and the memory stores a computer program; and the processor is configured to invoke the computer program in the memory, to enable the communication apparatus to perform the method according to any one of claims 10 to 17.

22. A communication system, wherein the communication system comprises the communication apparatus according to claim 18 or 20 and the communication apparatus according to claim 19 or 21.

23. A computer-readable storage medium, wherein the storage medium stores a computer program or instructions, and when the computer program or the instructions are executed by a computer, the method according to any one of claims 1 to 9 or the method according to any one of claims 10 to 17 is implemented.

24. A computer program product, wherein when a computer reads and executes the computer program product, the computer is enabled to perform the method according to any one of claims 1 to 9 or the method according to any one of claims 10 to 17.

FIG. 1A

FIG. 1B

FIG. 2

```
Terminal                      TRP                    Positioning
device                                                 server
   │                           │                         │
   │                           │      S301: Request PRS   │
   │                           │◄─── configuration information
   │                           │                         │
   │                           │      S302: PRS configuration
   │                           │────── information ──────►│
   │                           │                         │
   │   S303: PRS configuration information of a plurality of TRPs
   │◄─────────────────────────────────────────────────────│
   │                           │                         │
   │      S304: Send a PRS      │                         │
   │◄──────────────────────────│                         │
   │                           │                         │
   │          S305: Report a measurement result          │
   │──────────────────────────────────────────────────►│
   │                           │                         │
```

FIG. 3A

| | TRP 1 | TRP 2 | TRP 3 | TRP 4 | |
|---|---|---|---|---|---|
| Frequency band 1 | PRS resource set 1 | | | PRS resource set 1 | 50 Mhz |
| Frequency band 2 | PRS resource set 2 | PRS resource set 1 | | PRS resource set 2 | 100 Mhz |
| Frequency band 3 | | PRS resource set 2 | PRS resource set 1 | PRS resource set 3 | 100 Mhz |
| Frequency band 4 | | | PRS resource set 2 | PRS resource set 4 | 50 Mhz |

FIG. 3B

FIG. 4

FIG. 5

| Terminal device | | Positioning server |
| --- | --- | --- |

S601: Third information
(used to configure PRSs from
a plurality of TRPs)

S602: Determine priorities of the
plurality of TRPs according to a
predefined or preconfigured
priority rule

S603: Measure the PRSs from the
plurality of TRPs based on the
priorities of the plurality of TRPs

FIG. 6

| Terminal device | | Positioning server |
| --- | --- | --- |

S701: Third information
(used to configure PRSs from a
plurality of TRPs)

S702: First information
(indicating priorities of the
plurality of TRPs)

S703: Measure the PRSs from the
plurality of TRPs based on the
priorities of the plurality of TRPs

FIG. 7

|  | TRP 1 | TRP 2 | TRP 3 | TRP 4 |  |
|---|---|---|---|---|---|
| Frequency band 1 | PRS resource set |  | PRS resource set |  | 50 Mhz |
| Frequency band 2 |  | PRS resource set |  |  | 100 Mhz |
| Frequency band 3 |  |  |  | PRS resource set | 100 Mhz |
| Frequency band 4 |  |  |  | PRS resource set | 50 Mhz |

FIG. 8

900

| Storage unit | 901 |
| Processing unit | 902 |
| Communication unit | 903 |

FIG. 9

1030

1010

1020

Signal processing part

Modem subsystem

Multimedia subsystem

Central processing subsystem

Peripheral subsystem

Radio frequency part

1032

1033

Storage element

Interface circuit

1031

Processing element

FIG. 10

1100

Apparatus

1103

1101

Interface circuit

Processor

1102

Memory

FIG. 11

## INTERNATIONAL SEARCH REPORT

| International application No. |
|---|
| **PCT/CN2024/073413** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 终端, 基站, 定位, 参考信号, 测量, 优先级, 频带组, 带宽, 相同, 不同, 切换, 减少, UE, TRP, eNB, gNB, position, PRS, measure, priority, BW, bandwidth, same, different, handover, reduce

### C. DOCUMENTS CONSIDERED TO BE RELEVANT

| Category* | Citation of document, with indication, where appropriate, of the relevant passages | Relevant to claim No. |
|---|---|---|
| A | CN 114285535 A (VIVO COMMUNICATION TECHNOLOGY CO., LTD.) 05 April 2022 (2022-04-05)<br>description, paragraphs [0039]-[0653] | 1-24 |
| A | CN 114830755 A (QUALCOMM INC.) 29 July 2022 (2022-07-29)<br>entire document | 1-24 |
| A | CN 115136675 A (QUALCOMM INC.) 30 September 2022 (2022-09-30)<br>entire document | 1-24 |
| A | CN 115412929 A (HUAWEI TECHNOLOGIES CO., LTD.) 29 November 2022 (2022-11-29)<br>entire document | 1-24 |
| A | WO 2022165825 A1 (HUAWEI TECHNOLOGIES CO., LTD.) 11 August 2022 (2022-08-11)<br>entire document | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073413**

| Patent document cited in search report | | | Publication date (day/month/year) | Patent family member(s) | Publication date (day/month/year) |
|---|---|---|---|---|---|
| CN | 114285535 | A | 05 April 2022 | None | |
| CN | 114830755 | A | 29 July 2022 | None | |
| CN | 115136675 | A | 30 September 2022 | None | |
| CN | 115412929 | A | 29 November 2022 | None | |
| WO | 2022165825 | A1 | 11 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310164280